# EUROPEAN PATENT SPECIFICATION

(11) **EP 3 667 904 B1**
(45) Date of publication and mention of the grant of the patent: **19.05.2021**
(21) Application number: 19174627.0
(22) Date of filing: 15.05.2019
(51) Int. Cl.: H02S 50/10

(54) **HAIL SIMULATOR FOR TESTING SOLAR CELLS AND OPERATION METHOD THEREOF**
HAGELSIMULATOR FÜR SOLARZELLEN UND VERFAHREN DAZU
SIMULATEUR DE GRÊLE POUR CELLULES SOLAIRES ET SON PROCÉDÉ

(30) Priority: 11.12.2018 LT 2018570
(43) Date of publication of application: 17.06.2020
(73) Proprietor: Vilniaus Gedimino technikos universitetas, 10223 Vilnius (LT)
(72) Inventor: MAKARSKAS, Vytautas, 04201 Vilnius (LT); KRISCIUNAS, Martynas, 02166 Vilnius (LT); ROTMANAS, Algimantas, 08401 Vilnius (LT); KILIKEVICIUS, Arturas, 03116 Vilnius (LT); JUREVICIUS, Mindaugas, 04332 Vilnius (LT)
(74) Representative: Pranevicius, Gediminas

(56) References cited:
- CN-U- 204 462 425
- KR-A- 20120 127 827

## Description

### TECHNICAL FIELD

The invention relates to a hail simulator for testing solar cells and a method to simulate the impact of atmospheric precipitation, for example, hail on the solar cell's surface. The device and method are to be used to test the resistance of the solar modules to atmospheric precipitation, and may also be used for other purposes where simulations of similar rhythmic or chaotic impact series on the surface are required. The document KR101238235B is a relevant prior art.

### BACKGROUND ART

During operation, the surfaces of solar cells experience not only fluctuations of temperature but also various mechanical effects such as static and dynamic loads caused by human and nature. One of the most important and most dangerous impacts to the surfaces of solar cells and the whole structure is the load of atmospheric precipitation, namely, the hail. In the course of production of solar cells transparent but resistant materials are chosen and they are designed to bear all possible loads that could emerge during operation. However, manufacturers have to be sure they supply quality product to their customers. For this reason, solar cells are tested at the end of the production phase. The goal of the present invention is to provide a testing device that would not only enable the most accurate simulation of hail and/or other mechanical impact loads on the surface of solar cells, but also make it possible to test products while they are moving in continuous stream in conveyor production.

There are not many publicized methods and devices dedicated for impact resistance tests of solar cells. There is a standardized method of testing - European standard EN 61215:2005 of the European Committee for Electrotechnical Standardization (CLC/TC 82). This standard, amongst other validation and testing methods, also regulates testing method for hail resistance when an ice ball of a predetermined weight, shape and temperature is launched at a certain velocity and hits the predefined spots of the solar cell's surface. If no damage is detected, the solar cells are certified and it is stated that they meet the requirements of the abovementioned standard. However, this standard does not regulate the operation and design of the ice ball launcher, but requires the required speed to be given to the ice balls. The trajectory is also not strictly regulated.

The method of testing when a pneumatic or other device is used to launch an ice ball into a solar cell is acceptable for product certification, but is completely unacceptable to the manufacturer if he intends to test all products directly in conveyor production.

There are several patented devices for testing the resistance of solar cells to hail. For example, patent application CN106768778A describes a device and method for testing a hail resistance of solar cells. The device has an air compressor, air pressure control valve, solenoid valve, hail acceleration channel, hail speed meter, hail speed control channel, hail container, and water sprayer.

In this device the hail is simulated by launching with air compressor a pre-shaped ice ball, frozen to the temperature of -10°C ± 5°C and having a diameter of 45.00 mm, on the surface of the solar cell being tested.

Another hail simulator for testing resistance of solar cells against hail impact is described in the patent application CN201688960. Again, the principle of operation of the device is based on launching individual ice balls on the surface of solar cell with the help of compressed air.

The patent application US5650019 provides the following hail test description for testing surfaces of solar cells: the surface is being hit with 1.0 inch ice balls. The shot is executed from an air-propelled launcher at the speed of 23.2 m/s and after the shot the solar cell undergoes not only external visual inspection, but also the solar cell is dismantled and a detailed visual examination of each layer was performed.

In all of the above cases, individual shots were performed during testing and only visual inspection was performed. All of the above-mentioned hail simulators are designed for testing individual solar cells and are unacceptable in conveyor solar cell production.

There are more similar inventions known where inventors patent new protective coatings and describe their hail resistance testing. For example, patent application US20130199607 discloses glass that can withstand up to 0.5 kg of ice balls. In the said patent application, the diameter of the ice balls used for testing is from 1.0 cm to 8.0 cm and the speeds from 32.4 km/h to 172 km/h.

It can be concluded that all testers use pneumatic guns or similar devices that only perform single shot of ice balls. In modern mass conveyor production, where there is a relatively high production speed and the need to check the quality of a larger selection of products or of all products, it is clear that it is totally unacceptable to apply a particular ice ball shooting method. Such approach requires disproportional amount of time and resources of materials, energy and technical staff that would make the production inadequately expensive and slow. In addition, it can be argued that the test methods described in the above-mentioned patent sources are not methods for imitating hail occurring naturally. Individual shocks are characteristic only at the beginning and end of the hail, but in the case of heavy hail, the time intervals between the shocks are relatively small, and the shape, weights and speeds of ice balls and the time intervals between shocks are so different that they can cause a wide variety of vibration shapes and modes in the solar cells. Therefore, repeating impacts affecting the surface of the solar cell that is chaotically vibrating from previous impacts can cause unpredictable effect. It is very important for manufacturers to be able to test solar cells quickly, cheaply and as close as possible to natural hail conditions.

### SUMMARY OF THE INVENTION

The object of the present invention is to provide a test device for solar cells or other similar products, such as a hail simulator, and a method for generating mechanical shock series close to natural hail. The device according to this invention would work not in a mode of single impacts but, similarly to natural hail, in series of chaotic impacts. The testing device could be adjusted for more frequent or infrequent, stronger or weaker impacts, also impacts landing on the surface at different angles. This method can be applied to conveyor production when the solar cells pass through the test unit nonstop. For this purpose, the device may be equipped with an additional image scanning device that recognizes the defects, traces them and informs or sends signals to other processors of the automatic production process for stopping the conveyor, directing the defective product to another line or the like.

Functional features of the patented hail simulation method are obtained using elements imitating ice balls that are flexibly attached to the rotating element, such as a shaft, drum, disc or other. A drive mechanism rotating the shaft, such as reducer with electric motor or another mechanism generating rotating motion, enables the rotation speed to be changed, while changing the impact force and intervals between them. Changing the distance between the shaft and the surface of the solar cell being tested changes the angle of the impact force vector. And by adjusting the length and stiffness of flexible joints, connecting balls and the shaft, the impact strength and nature of randomness is changed. By changing the above mentioned parameters, as well as changing the number of balls, mass, form and material they are made of, it is possible not only to imitate the most varied naturally occurring hail variants, but also to simulate a different kind of rhythmic or chaotic impacts.

### BRIEF DESCRIPTION OF DRAWINGS

Fig. 1 provides schematic diagram of hail simulation device in two projections;
Fig. 2 provides one of possible embodiments with several rotation shafts;
Fig. 3 shows a possibility to change directions of impacts by adjusting angles of rotation axes with regard to movement direction of elements being tested;
Fig. 4 is one variant of operation method with several shafts rotating in different directions.

### DETAILED DESCRIPTION OF THE INVENTION

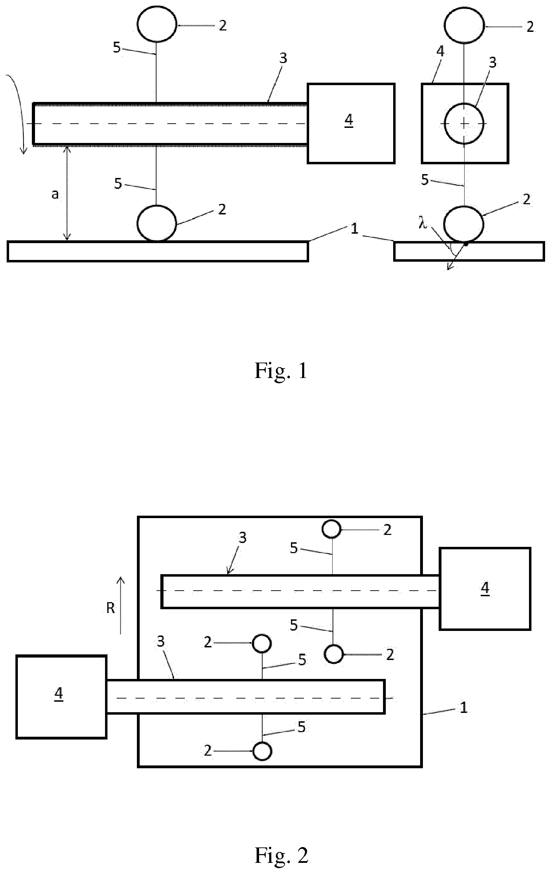

Fig. 1 shows a hail simulation device of the present invention that creates a series of impacts on the surface being tested, for instance, a solar cell or some other similar surface 1, using ball elements 2, that imitate hail ice balls, made of plastic or other material, flexibly attached to the rotating element, i.e. shaft 3. The rotary motion of the shaft 3 is provided by a mechanism 4, which can be a motor with a frequency converter, which can be used to change the speed, while changing the impact force and intervals between them. The length and stiffness of the flexible joints 5, connecting the balls 2 and the shaft 3, are selected according to the products being tested, as the direction and force of the impact depend on that.

By changing the distance a between the shaft 3 and the surface 1 being tested, the angle λ of the impact force is also changed. By varying the above parameters, as well as changing the number of balls 2, which are flexibly attached to the shaft 3, their layout, mass, shape and material they are made of, not only different variants of natural hail but also other types of shocks are simulated.

When the shaft 3 is rotating, the flexible joint 5 is strained due to centrifugal force and balls 2 move in a circular trajectory at a certain linear speed. The speed of the ball 2 after hitting the surface 1 being tested becomes almost equal to zero, therefore impact conditions are formed - at that moment the maximum impact force is generated.

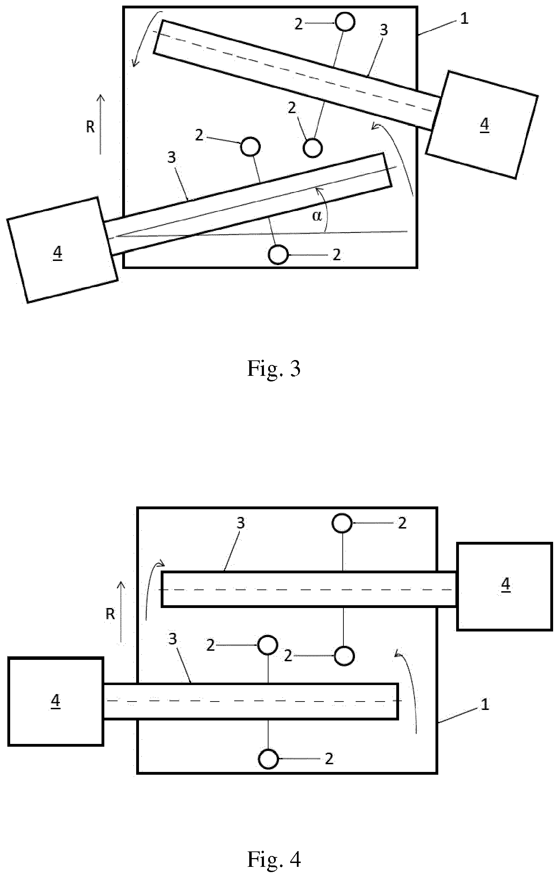

The testing device for solar cells or other similar surfaces, operating according to the method of the present invention, can be constructed with one or several shafts 3, as illustrated in Fig. 2. The shafts 3 with regard to the elements 1 passing by them can be oriented perpendicularly to the direction R of movement of elements 1, as shown in Fig. 4, or at any other angle, as shown in Fig. 3. The rotation directions of shafts 3 can coincide, as shown in Fig. 4, or be opposite, as shown in Fig. 3.

In such embodiments where multiple shafts 3 are used, different shafts 3 may have different modifications and functions: different rotation speeds and directions, different materials of balls, weighs and other parameters, making it possible to simulate a wider variety of rhythmic and chaotic impacts on solar cell surfaces 1 moving along conveyor.

## Claims

1. A hail and other impact simulation device for testing solar cell surfaces having a device for generating impact loads on a test surface, **characterized in that** the device comprises a plurality of balls (2), imitating hailstones, attached by a flexible joint (5) to a rotating shaft (3) connected to a motor (4).

2. The device according to claim 1, **characterized by** comprising more than one rotating shaft (3).

3. The device according to claim 1 or 2, **characterized in that** the longitudinal axes of rotating shafts (3) are oriented perpendicularly to the direction (R) of movement of solar cells (1) on the conveyor.

4. The device according to claim 3, **characterized in that** the longitudinal axes of rotating shafts (3) are oriented at an angle (α) to the direction (R) of movement of solar cells (1) on the conveyor.

5. The device according to claim 1, **characterized in that** the motor (4) is a variable frequency motor.

6. An operation method of a hail simulation device for testing solar cells surfaces, comprising the step of hitting the surface of the solar cell being tested with an impact load imitating the hail, **characterized by** impacting the surface of the solar cell (1) with a plurality of hail imitating balls (2), moving at a circular trajectory, attached by flexible joints (5) to the rotation shaft (3) connected to the motor (5).

7. The method according to claim 6, **characterized by** impacting the surface of the solar cell (1) with a plurality of hail imitating balls (2) attached to two or more shafts (3) rotating in the same direction.

8. The method according to claim 7, **characterized by** impacting the surface of the solar cell (1) with a plurality of hail imitating balls (2) attached to two or more shafts (3) rotating in different directions.

9. The method according to any one of the preceding claims 6 to 8, **characterized by** simultaneously using a plurality of balls (2) of different mass, materials and dimensions.

10. The method according to any one of the preceding claims 6 to 9, **characterized in that,** by changing the distance (a) between the shaft (3) and the solar cell (1) being tested, determines the impact of the balls (2) on the solar cell (1) at different angles of impact force (λ).

11. The method according to any one of the preceding claims 6 to 10, **characterized in that,** by changing the frequency of the motor (4) and the angle (α) of the longitudinal axis of the shafts (3) relative to the direction (R) of movement of the solar cells (1), different variants of natural hail are simulated.

12. The method according to any one of the preceding claims 6 toll, **characterized in that** the method is used in the conveyor production when the solar cells (1) pass nonstop through the hail simulator.

13. The method according to any one of the preceding claims 6 to 12, **characterized by** using an additional image scanning equipment that recognizes defects, traces them and notifies or sends signals to other processors of the automatic production process for stopping the conveyor or direct the defective product to another line.

## Patentansprüche

1. Hagel- und andere Aufprallsimulationsvorrichtung zum Testen von Solarzellenoberflächen mit einer Vorrichtung zum Erzeugen von Aufprallbelastungen auf einer Testoberfläche, **dadurch gekennzeichnet, dass** die Vorrichtung eine Vielzahl von Kugeln (2) umfasst, die Hagelkörner imitieren und durch ein flexibles Gelenk (5) an einer rotierenden Welle (3) befestigt sind, die an einen Motor (4) angeschlossen ist.

2. Vorrichtung nach Anspruch 1, **dadurch gekennzeichnet, dass** sie mehr als eine Welle (3) umfasst.

3. Vorrichtung nach Anspruch 1 oder 2, **dadurch gekennzeichnet, dass** die Längsachsen von rotierenden Wellen (3) senkrecht zur Richtung (R) der Bewegung von Solarzellen (1) auf dem Förderband ausgerichtet sind.

4. Vorrichtung nach Anspruch 3, **dadurch gekennzeichnet, dass** die Längsachsen von rotierenden Wellen (3) in einem Winkel (α) zur Richtung (R) der Bewegung von Solarzellen (1) auf dem Förderband ausgerichtet sind.

5. Vorrichtung nach Anspruch 1, **dadurch gekennzeichnet, dass** der Motor (4) ein Motor mit variabler Frequenz ist.

6. Betriebsverfahren einer Hagelsimulationsvorrichtung zum Testen von Solarzellenoberflächen, das den Schritt umfasst, die Oberfläche der zu testenden Solarzelle mit einer den Hagel imitierenden Aufprallbelastung zu treffen, **dadurch gekennzeichnet, dass** eine Vielzahl von Hagel imitierenden Kugeln (2) auf die Oberfläche der Solarzelle (1) aufprallen, die sich auf einer kreisförmigen Bahn bewegen, und die durch flexible Gelenke (5) an der rotierenden Welle (3) befestigt sind, die an den Motor (4) angeschlossen ist.

7. Verfahren nach Anspruch 6, **dadurch gekennzeichnet, dass** eine Vielzahl von Hagel imitierenden Kugeln (2) auf die Oberfläche der Solarzelle (1) aufprallen, die an zwei oder mehr Wellen (3) befestigt sind, die in derselben Richtung rotieren.

8. Verfahren nach Anspruch 7, **dadurch gekennzeichnet, dass** eine Vielzahl von Hagel imitierenden Kugeln (2) auf der Oberfläche der Solarzelle (1) aufprallen, die an zwei oder mehr Wellen (3) befestigt sind, die in verschiedenen Richtungen rotieren

9. Verfahren nach einem der vorstehenden Ansprüche 6 bis 8, **dadurch gekennzeichnet, dass** gleichzeitig eine Vielzahl von Kugeln (2) mit verschiedener Masse, Werkstoffen und Abmessungen verwendet wird.

10. Verfahren nach einem der vorstehenden Ansprüche 6 bis 9, **dadurch gekennzeichnet, dass** eine Änderung des Abstands (a) zwischen der Welle (3) und der zu testenden Solarzelle (1) den Aufprall der Kugeln (2) auf der Solarzelle (1) bei verschiedenen Winkeln der Aufprallkraft (A) bestimmt.

11. Verfahren nach einem der vorstehenden Ansprüche 6 bis 10, **dadurch gekennzeichnet, dass** durch Ändern der Frequenz des Motors (4) und des Winkels (α) der Längsachse der Wellen (3) in Bezug auf die Richtung (R) der Bewegung der Solarzellen (1) verschiedene Varianten von natürlichem Hagel simuliert werden.

12. Verfahren nach einem der vorstehenden Ansprüche 6 bis 11, **dadurch gekennzeichnet, dass** das Verfahren bei der Förderbandproduktion angewandt wird, wenn die Solarzellen (1) ohne Pause durch den Hagelsimulator gehen.

13. Verfahren nach einem der vorstehenden Ansprüche 6 bis 12, **dadurch gekennzeichnet, dass** ein zusätzliches Bildabtastungsgerät eingesetzt wird, das Defekte erkennt, diese verfolgt und andere Prozessoren des automatischen Produktionsprozesses benachrichtigt oder Signale an sie sendet, um das Förderband zu stoppen oder das defekte Produkt an eine andere Fertigungsstraße zu richten.

## Revendications

1. Dispositif de simulation de grêle ou d'autres impacts, destiné à tester les surfaces de cellules solaires, comportant un dispositif de génération de charge générer des charges d'impact sur une surface de test, **caractérisé en ce que** le dispositif comprend une pluralité de billes (2) imitant des grêlons fixées par une jointure souple (5) à un arbre rotatif (3) connecté à un moteur (4).

2. Dispositif selon la revendication 1, **caractérisé en ce qu'**il comprend plus d'un arbre rotatif.

3. Dispositif selon la revendication 1 ou 2, **caractérisé en ce que** les axes longitudinaux des arbres rotatifs (3) sont orientés perpendiculairement à la direction (R) de mouvement des cellules solaires (1) sur le convoyeur.

4. Dispositif selon la revendication 3, **caractérisé en ce que** les axes longitudinaux des arbres rotatifs (3) sont orientés suivant un angle (α) par rapport à la direction (R) de mouvement des cellules solaires (1) sur le convoyeur.

5. Dispositif selon la revendication 1, **caractérisé en ce que** le moteur (4) est un moteur à fréquence variable.

6. Procédé d'actionnement d'un dispositif de simulation de grêle destiné à tester les surfaces de cellules solaires, comportant l'étape de frappe de la surface de la cellule solaire en cours de test avec une charge d'impact imitant la grêle, **caractérisé par** l'exercice d'un impact sur la surface de la cellule solaire (1) par une pluralité de billes imitant la grêle (2) se déplaçant sur une trajectoire circulaire et fixées par des jointures flexibles (5) à l'arbre rotatif (3) connecté au moteur (4).

7. Procédé selon la revendication 6, **caractérisé par** l'exercice d'un impact sur la surface de la cellule solaire (1) par une pluralité de billes imitant la grêle (2) fixées à deux arbres ou davantage (3) tournant dans la même direction.

8. Procédé selon la revendication 7, **caractérisé par** l'exercice d'un impact sur la surface de la cellule solaire (1) par une pluralité de billes imitant la grêle (2) fixées à deux arbres ou davantage (3) tournant dans des directions différentes.

9. Procédé selon l'une quelconque des revendications 6 à 8, **caractérisé par** l'utilisation simultanée d'une pluralité de billes (2) de masses, matériaux et dimensions différents.

10. Procédé selon l'une quelconque des revendications 6 à 9, **caractérisé en ce que**, en changeant la distance (a) entre l'arbre (3) et la cellule solaire (1) en cours de test, on détermine l'impact des billes (2) sur la cellule solaire (1) à différents angles de force d'impact (λ).

11. Procédé selon l'une quelconque des revendications 6 à 10, **caractérisé en ce que**, en changeant la fréquence du moteur (4) et l'angle (α) de l'axe longitudinal des arbres (3) par rapport à la direction (R) de mouvement des cellules solaires (1), différentes variantes de grêle naturelle sont simulées.

12. Procédé selon l'une quelconque des revendications 6 à 11, **caractérisé en ce que** le procédé est utilisé dans la production de convoyeurs lorsque les cellules solaires (1) passent sans arrêt à travers le simulateur de grêle.

13. Procédé selon l'une quelconque des revendications 6 à 12, **caractérisé par** l'utilisation d'un équipement de balayage d'images supplémentaire qui reconnaît les défauts, les trace et notifie ou envoie des signaux à d'autres processeurs du processus de production automatique pour arrêter le convoyeur ou diriger le produit défectueux vers une autre ligne.
